Europäisches Patentamt

European Patent Office

Office européen des brevets

(19)

(11) Veröffentlichungsnummer: **0 106 331**
**A2**

(12) # EUROPÄISCHE PATENTANMELDUNG

(21) Anmeldenummer: **83110256.1**

(22) Anmeldetag: **14.10.83**

(51) Int. Cl.³: **D 21 D 5/04**

(30) Priorität: **20.10.82 SE 8205961**

(43) Veröffentlichungstag der Anmeldung:
**25.04.84 Patentblatt · 84/17**

(84) Benannte Vertragsstaaten:
**AT BE CH DE FR GB IT LI NL**

(71) Anmelder: **AB Spray Technics S.T.**
**Box 21**
**S-573 01 Tranäs(SE)**

(72) Erfinder: **Janson, Bengt**
**Germaniavägen 3 C**
**S-182 62 Djursholm(SE)**

(74) Vertreter: **Patentanwälte Dr. Ing. Eugen Maier Dr. Ing.**
**Eckhard Wolf**
**Pischekstrasse 19**
**D-7000 Stuttgart 1(DE)**

(54) Verfahren und Vorrichtung zum Abtrennen grober Partikel von einer Flüssigkeit.

(57) Um beispielsweise in Waschanlagen u.dgl. der Zellulose-Industrie grobe Partikel aus einer Flüssigkeit, z.B. Wasser, abzuscheiden, ist es üblich, einen senkrechten Behälter (14) zu verwenden, in dem einer Düse (12) von einer Pumpe (11) Flüssigkeit zugeführt wird, die von der Düse (12) in Gestalt eines konischen Strahls (13) nach oben gegen die Unterseite eines Siebtuches (15) zersprüht wird. Oberhalb des Siebtuches (15) ist ein Auslaß (16) für die gereinigte Flüssigkeit vorgesehen, während auf das Siebtuch (15) auftreffende grobe Partikel zurückfallen und auf den Boden (17) des Behälters (14) absinken. Gemäß der Erfindung durchsetzt der gesamte, von der Pumpe (11) geförderte und von der Düse (12) zersprühte Flüssigkeitsstrom das Siebtuch (15) und fließt durch einen oberhalb des Siebtuches (15) angeordneten Auslaß (16) ab.

EP 0 106 331 A2

./...

FIG.2

Beschreibung

Die Erfindung betrifft ein Verfahren zum Abtrennen grober Partikel von einer Flüssigkeit gemäß dem Gattungsbegriff des Anspruchs 1 sowie eine Vorrichtung zur Durchführung des Verfahrens, die die im Gattungsbegriff des Anspruchs 4 aufgeführten Merkmale aufweist.

Vorrichtungen dieser Art sind aus der US-PS 3 789 978 und der US-PS 4 153 543 bekannt.

Bei diesen bekannten Vorrichtungen wird eine grobe und feine Partikel enthaltende Flüssigkeit, z.B. Wasser, von einer in einem senkrechten Behälter angeordneten Düse in einem kegelförmigen Strahl gegen die Unterseite eines horizontal angeordneten Siebtuches zersprüht. Bei Anlagen der Zellulose-Industrie bestehen diese Partikel u.a. aus groben und feinen Fasern. In Waschanlagen kommt die Flüssigkeit von Waschmaschinen und enthält feine Fasern, Fusseln u.dgl. sowie gröbere Bestandteile.

Bei diesen vorbekannten Vorrichtungen wird der Flüssigkeitsspiegel in dem Behälter in einem konstanten Niveau unterhalb der Düse gehalten, so daß diese sich in einem geschlossenen Luftraum zwischen dem Siebtuch und der Flüssigkeitsoberfläche befindet. Bei diesen bekannten Vorrichtungen wird der Flüssigkeitsspiegel mittels eines Überlaufs konstant gehalten und diese Flüssigkeit muß dann von den gröberen Partikeln gereinigt werden, ehe sie weiter verwendet werden kann. In der Zellulose-Industrie muß zum Abscheiden dieser groben Partikel zusätzliche Energie bei der Behandlung dieser Flüssigkeit aufgewandt werden, deren Menge 15-30% der von der Pumpe geförderten Menge beträgt.

Diese Unterteilung des gesamten Flusses weist beträchtliche Nachteile auf.

Bei Waschanlagen tritt noch der weitere Nachteil hinzu, daß das Abscheiden mittels des Überlaufs gleichzeitig beträchtliche Wärmeverluste mit sich bringt.

Der Erfindung liegt die Aufgabe zugrunde, diese Nachteile der bekannten Vorrichtungen weitgehend zu vermeiden, was gemäß der Erfindung mit den Mitteln erreicht wird, die die kennzeichnenden Merkmale des Anspruchs 1 und des Anspruchs 4 bilden. Vorteilhafte Ausgestaltungen des Verfahrens und der Vorrichtung bilden den Gegenstand der Unteransprüche.

Bei dem erfindungsgemäßen Verfahren und der zur Durchführung dieses Verfahrens dienenden Vorrichtung kann die Flüssigkeit von dem Behälter nur durch das Siebtuch abfließen. Die das Siebtuch in einer Zeiteinheit durchsetzende Flüssigkeit ist somit gleich der in der Zeiteinheit von der Pumpe geförderten Gesamtflüssigkeit, so daß die bei den bekannten Vorrichtungen mit dem über den Überlauf abfließenden Teilstrom verbundenen Nachteile gänzlich vermieden werden. Bei dem erfindungsgemäßen Verfahren und der erfindungsgemäßen Vorrichtung sinken die groben Partikel langsam zum Boden des Behälters ab und sammeln sich dort an, so daß sie von Zeit zu Zeit in einfacher Weise und rasch aus dem Behälter entfernt werden können, indem ein am Boden des Behälters angeordnetes Abscheideventil kurze Zeit geöffnet wird. Bei Waschanlagen werden so beträchtliche Vorteile erzielt, da kein heißes Wasser aus dem Behälter abfließt, das gesamte Wasser vielmehr durch das Siebtuch hindurchströmt und somit seine Wärme an Wärmetauscher abgeben kann. Der Einsatz der erfindungsgemäßen Vorrichtung in Waschanlagen bringt u.a. noch den Vorteil mit sich, daß die BOD- und die COD-Gehalte des das Siebtuch durchströmenden Wassers auf mindestens 60% gesenkt werden können. Dieser Vorteil wird insbesondere dann erzielt, wenn der Flüssigkeitsspiegel in dem Behälter auf einer konstanten Höhe oberhalb der Düse gehalten wird. Da das unkontrollierte Einleiten solchen verunreinigten Wassers in öffentliche Gewässer in verschiedenen Ländern unter Strafe steht, bedeutet eine Verringerung dieser Verunreinigungen niedrigere Strafen und somit geringere Betriebskosten.

Um den Flüssigkeitsspiegel oberhalb der Düse fein einstellen zu können, ist die Saugleitung der Pumpe vorteilhafterweise mit einer Luftleitung verbunden, in der ein Regulierventil angeordnet ist, so daß mehr oder weniger Luft in die von der Pumpe geförderte Flüssigkeit eingesaugt werden kann. Diese zusätzliche Luft entspannt sich dann in dem unterhalb des Siebtuches gelegenen Luftraum und beeinflußt den Luftdruck in diesem Raum und damit auch die Höhe des Flüssigkeitsspiegels in dem Behälter. Die von der Pumpe geförderte Flüssigkeit enthält üblicherweise eine kleine Menge Luft, die sich ebenfalls beim Sprühvorgang entspannt und somit den Luftdruck in dem unter dem Siebtuch gelegenen Raum zusätzlich erhöht.

Um die Betriebsbedingungen noch zu verbessern, ist oberhalb der Düse im Abstand von dieser ein Leitkonus angeordnet, so daß der vorzugsweise hohle konische Flüssigkeitsstrahl eine Flüssigkeitsschicht durchsetzt, die sich in dem Spalt zwischen der Düse und der unteren Begrenzung des Leitkonus befindet. Die Ausbildung des Flüssigkeitsstrahls wird so durch den Leitkonus bis zu dessen oberem Ende und darüber hinaus bis zum Auftreffen auf das Siebtuch aufrechterhalten.

Der Spiegel der Behälterflüssigkeit   reicht somit
an der Außenfläche des Leitkonus bis zu einer gewissen Höhe herauf. Praktische Versuche haben gezeigt,
daß mit der Anordnung dieses Leitkonus u.a. ein
stabiler Betrieb mit einem gleichbleibenden Flüssigkeitsspiegel erreicht wird.

In der Zeichnung sind in schematischer Weise zwei
Ausführungsbeispiele der erfindungsgemäßen Vorrichtung
dargestellt.

Fig. 1   zeigt einen senkrechten Schnitt durch die
         Vorrichtung gemäß einem 1. Ausführungsbeispiel;

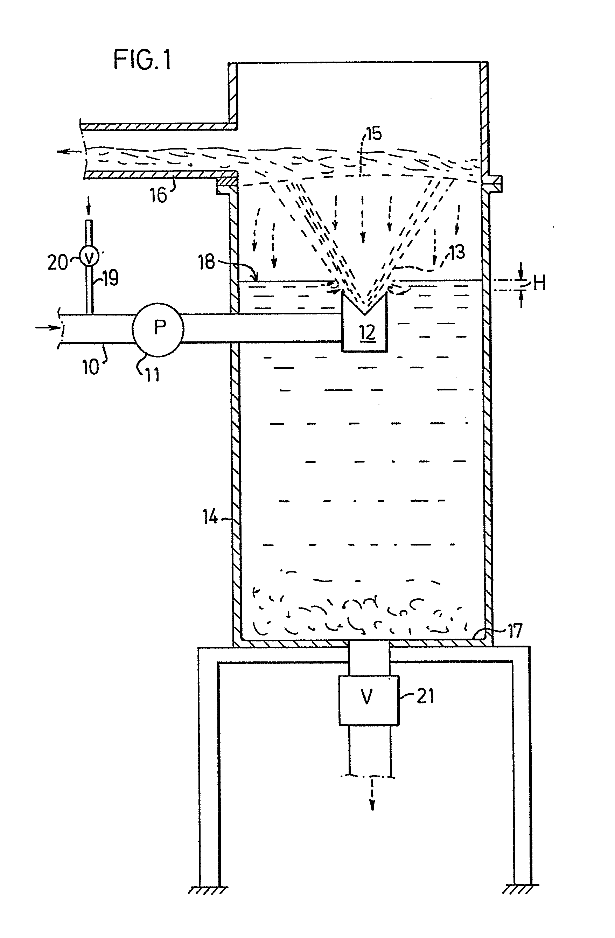

Fig. 2   zeigt denselben Schnitt durch ein zweites
         Ausführungsbeispiel, das sich von dem in
         Fig. 1 dargestellten Ausführungsbeispiel
         durch die Anordnung eines Leitkonus oberhalb
         der Düse unterscheidet.

Die Flüssigkeit, die grobe und feine Partikel wie z.B.
Fasern unterschiedlicher Größe enthält, wird dem
Behälter 14 durch eine Leitung 10 zugeführt. Die
Flüssigkeit enthält üblicherweise auch eine gewisse
Luftmenge. In der Leitung 10 ist eine Pumpe 11 angeordnet, deren Förderdruck in üblicher Weise regulierbar
ist. Die Pumpe 11 fördert die Flüssigkeit zu einer
Düse 12 bekannter Ausführungsform, die die Flüssigkeit
in einen konischen Strahl 13 zersprüht, der zweckmäßigerweise hohl ausgebildet sein soll.

Die Düse 12 ist in einem senkrechten Behälter 14 angeordnet, der in seinem oberen Bereich eine Zwischenwand
in Gestalt eines Siebtuches 15 aufweist. Die Maschenweite des Siebtuches kann in einem Bereich von 10-100 μm
liegen und liegt üblicherweise in dessen unterem Bereich.

Oberhalb des Siebtuches 15, das von der Flüssigkeit zusammen mit feinen Partikeln durchsetzt wird, ist ein Auslaßstutzen 16 angeordnet.

Gemäß der Erfindung strömt die gesamte von der Pumpe 11 geförderte Flüssigkeit durch das Siebtuch 15 und den Auslaßstutzen 16.

Die Flüssigkeit wird nach oben gegen die Unterseite des Siebtuches 15 zersprüht, wobei die gröberen Partikel auf das Siebtuch auftreffen und von diesem im Behälter nach unten fallen, in dessen Flüssigkeit sie nach unten sinken und sich an dessen Boden 17 ansammeln.

Die Flüssigkeit wird in dem Behälter 14 auf einer im wesentlichen konstanten Höhe 18 gehalten, wobei der Flüssigkeitsspiegel in einem Abstand H oberhalb der Auslaßöffnung der in Fig. 1 gezeichneten Düse 12 liegt, so daß der konische Flüssigkeitsstrahl eine Flüssigkeitsschicht entsprechender Dicke durchsetzt, ohne seine konische Gestalt zu verlieren. Die in der Nähe der Düse 12 befindliche Flüssigkeit wird so in den Flüssigkeitsstrahl hineingesaugt, so daß eine größere Flüssigkeitsmenge gegen das Siebtuch 15 zersprüht wird, als von der Pumpe 11 gefördert wird. Wenn die Pumpe beispielsweise 100 Liter je Minute fördert, so können 120 Liter je Minute gegen das Siebtuch 15 zersprüht werden, wobei 100 Liter je Minute durch das Siebtuch 15 und den Auslaßstutzen 16 hindurchströmen, während 20 Liter je Minute von dem Siebtuch nach unten zurückfließen und sich mit dem Flüssigkeitsstrahl der Düse 12 vermischen und so erneut gegen das Siebtuch 15 gesprüht werden. Die größere gegen das Siebtuch 15 gesprühte Flüssigkeitsmenge führt so zu stabileren und ruhigeren Betriebsbedingungen.

Bei der Vorrichtung nach Fig. 1 erfolgt die Grobeinstellung des Flüssigkeitsspiegels durch Regulierung des Pumpendrucks. Eine Feineinstellung erfolgt dadurch, daß mehr oder weniger Zusatzluft in die Saugleitung der Pumpe 11 eingeleitet wird. Zu diesem Zweck ist die Saugleitung 10 der Pumpe 11 mit einer Luftleitung 19 verbunden, so daß durch diese Leitung 19 Luft angesaugt werden kann, deren gewünschte Menge mittels des Regulierventils 20 fein eingestellt werden kann. Grundsätzlich wäre es auch möglich, eine einstellbare Luftmenge unmittelbar in den Luftraum zwischen dem Siebtuch 15 und dem Flüssigkeitsspiegel 18 einzuleiten, dies würde jedoch eine Druckluftzufuhr erforderlich machen, die etwas aufwendiger wäre als eine Anordnung, bei der in einfacher Weise Luft aus der Leitung 19 angesaugt wird.

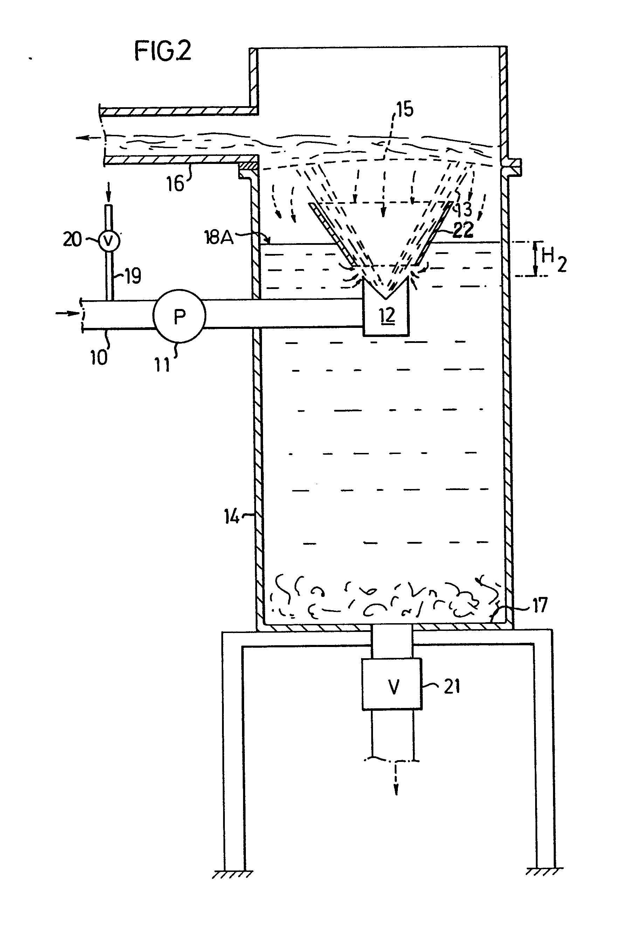

Bei dem in Fig. 2 dargestellten Ausführungsbeispiel ist in dem Behälter 14 eine Leitfläche 22 in Gestalt eines Kegelstumpfmantels vorgesehen, dessen Kegelwinkel näherungsweise derselbe ist wie der des von der Düse 12 zersprühten Flüssigkeitsstrahls. Diese konische Leitfläche ist koaxial mit der Düse 12 oberhalb dieser mit ihrem konisch sich verjüngenden Ende nach unten weisend angeordnet, so daß der konische Flüssigkeitsstrahl in diesen Leitkonus eintritt und innerhalb dieses Leitkonus geführt wird, bis er an dem oberen Ende des Leitkonus vorbeiströmend auf das Siebtuch 15 auftrifft.

Zwischen dem unteren Ende des Leitkonus 22 und der Düse 12 besteht ein Spalt, dessen Höhe die Dicke der Flüssigkeitsschicht bestimmt, durch die der konische Flüssigkeitsstrahl hindurchdringt, wobei gleichzeitig aus der Umgebung des Flüssigkeitsstrahls stammende, größere Partikel enthaltende Flüssigkeit in den Spalt eindringt.

Das obere Ende des Leitkonus befindet sich etwa auf halber Höhe zwischen der Düse 12 und dem Siebtuch 15 oder auch etwas höher. Der Flüssigkeitsspiegel 18A in dem Behälter 14 ist hierbei etwas höher als bei dem in Fig. 1 dargestellten Ausführungsbeispiel, da er sich gegenüber dem Spalt zwischen der Düse 12 und dem Leitkonus 22 auf einer größeren Höhe befindet. In diesem Fall befindet sich der Flüssigkeitsspiegel auf einer Höhe H2 oberhalb der Düsenöffnung.

Aus der Tatsache, daß in diesem Fall der Flüssigkeitsspiegel ein höherer ist, resultiert eine verbesserte Ejektor-Wirkung, d.h. ein verbessertes Hineinreißen von Umgebungsflüssigkeit in den Spalt durch den Strahl. Bei der in Fig. 1 dargestellten Vorrichtung wird erreicht, daß eine größere Flüssigkeitsmenge auf das Siebtuch 15 auftrifft, als von der Pumpe 11 gefördert wird. Praktische Versuche haben gezeigt, daß die Anordnung eines kegelmantelförmigen Leitkonus eine beträchtliche Verbesserung durch eine weitere Stabilisierung der Betriebsbedingungen ergibt.

Am Boden des Behälters 14 ist ein Auslaufventil 21 vorgesehen, um von Zeit zu Zeit die groben Partikel, die sich am Boden des Behälters angesammelt haben, abziehen zu können. In gewissen Fällen genügt es, die groben Partikel während 24 Stunden nur einmal abzuziehen.

Aus dem Vorstehenden ist ersichtlich, daß einer der wesentlichsten Vorteile der erfindungsgemäßen Vorrichtung gegenüber den aus den vorgenannten US-Patentschriften bekannten Vorrichtungen darin besteht, daß der von der Pumpe 11 geförderte Flüssigkeitsstrom nicht kontinuierlich in mehr als einen aus dem Behälter 14 abfließenden Strom unterteilt wird.

Bei den vorbekannten Vorrichtungen kann der abgezweigte Flüssigkeitsstrom, wie schon erwähnt wurde, bis zu ungefähr 15-30% des Gesamtstroms betragen. Bei Wasserreinigungsanlagen beispielsweise bedeutet dies, daß auch der abgezweigte Wasserstrom noch gereinigt werden muß, um einen vollkommenen Reinigungseffekt zu erzielen. Dies ist jedoch bei der erfindungsgemäßen Vorrichtung nicht notwendig, da 100% des gesamten Flüssigkeitsstroms das Siebtuch 15 durchsetzen und durch den Auslaufstutzen 16 abfließen. Bei einem gegebenen, das Siebtuch 15 durchsetzenden Strom kann bei dem Verfahren und der Vorrichtung gemäß der Erfindung eine Pumpe mit geringerer Förderleistung Verwendung finden, als sie bei den bekannten Vorrichtungen benötigt wird.

0106331

Patentansprüche

1. Verfahren zum Abtrennen grober Partikel, z.B. grober
   Fasern, von einer Flüssigkeit, die mittels einer in
   einem senkrechten Behälter (14) angeordneten Düse (12)
   in Gestalt eines Kegels (13) nach oben gegen die Unterseite eines waagerecht angeordneten Siebtuches (15)
   oder eines entsprechenden Filtermittels zersprüht
   wird, so daß die groben Partikel in den Behälter (14)
   zurückfallen, während die feineren Partikel mit der
   Flüssigkeit durch das Siebtuch (15) geschwemmt und
   als feine Fraktion abgezogen werden, wobei die Flüssigkeit in dem Behälter (14) auf einem im wesentlichen
   konstanten Niveau (18) gehalten wird, d a d u r c h
   g e k e n n z e i c h n e t , daß bei kontinuierlich
   durchgeführtem Verfahren die gesamte in einer Zeiteinheit durch die Düse (12) geförderte Flüssigkeitsmenge durch das Siebtuch (15) hindurch abgeleitet wird.

2. Verfahren nach Anspruch 1, d a d u r c h  g e k e n n -
   z e i c h n e t , daß bei kontinuierlich durchgeführtem
   Verfahren das Flüssigkeitsniveau (18) in dem Behälter
   (14) in einer im wesentlichen konstanten Höhe über
   der Auslaßöffnung der Düse (12) gehalten wird, so
   daß der kegelförmige Flüssigkeitsstrahl (13) durch
   eine Schicht der im Behälter (14) befindlichen Flüssigkeit gesprüht wird.

3. Verfahren nach Anspruch 2, d a d u r c h  g e k e n n -
   z e i c h n e t , daß das Flüssigkeitsniveau (18) in
   dem Behälter (14) durch Beimischen zusätzlicher Luft
   in das System vor dem Siebtuch (15) fein eingestellt
   wird.

4. Vorrichtung zur Durchführung des Verfahrens nach
   Anspruch 1 mit einer Pumpe (11), die eine feine und grobe Partikel enthaltende Flüssigkeit zu einer in
einem senkrechten Behälter (14) angeordneten Düse (12)
fördert, mittels der die Flüssigkeit im wesentlichen
in Form eines Hohlkegels gegen die Unterseite eines
waagerecht angeordneten Siebtuches (15) gesprüht
wird, das den oberen Abschluß eines Luftraums begrenzt, dessen untere Begrenzung durch die in dem
Behälter (14) enthaltene Flüssigkeit gebildet wird,
und durch das feinere Partikel mit der Flüssigkeit
hindurchgeschwemmt werden, während gröbere, auf das
Siebtuch (15) auftreffende Partikel in den Behälter
(14) zurückfallen, wobei in dem Luftraum ein Überdruck
aufrechterhalten wird, der die Höhe der in dem Behälter
(14) befindlichen Flüssigkeit mitbestimmt, d a -
d u r c h  g e k e n n z e i c h n e t , daß beim
kontinuierlichen Betrieb durch das Siebtuch (15)
und einen oberhalb des Siebtuches (15) angeordneten
Abfluß-Stutzen nur ein einziger Auslaß gebildet wird,
durch den die gesamte, in einer Zeiteinheit von der
Pumpe (11) geförderte Flüssigkeitsmenge durch das
Siebtuch (15) hindurch und den Abfluß-Stutzen (16)
abfließt.

5. Vorrichtung nach Anspruch 4, d a d u r c h  g e -
k e n n z e i c h n e t , daß mit der saugseitigen
Leitung (10) der Pumpe (11) eine Luftleitung (19) verbunden ist, durch die zusätzliche Luft in die Flüssigkeit gesaugt wird, die am Düsenauslaß entspannt wird
und den Luftdruck in dem über dem Flüssigkeitsspiegel
(18) gelegenen Luftraum erhöht und so die Höhe ($H, H_2$)
des Flüssigkeitsspiegels beeinflußt, und daß in der
Luftleitung (19) ein Regulierventil (20) zur Feineinstellung einer optimalen Menge zusätzlicher Luft
angeordnet ist.

6. Vorrichtung nach Anspruch 4 oder 5, d a d u r c h
   g e k e n n z e i c h n e t , daß koaxial, oberhalb
   der Düse (12) und im Abstand von dieser ein hohler
   Kegelstumpf (22) mit seinem verjüngten Ende der Düse
   (12) zugewandt angeordnet ist und daß der Kegelwinkel
   des Kegelstumpfes (22) im wesentlichen gleich dem
   Öffnungswinkel des konischen Flüssigkeitsstrahls (13)
   bzw. der Düse (12) ist, so daß beide Kegelwinkel im
   wesentlichen übereinstimmen, und daß der Spalt zwischen
   der Düse (12) und dem unteren Ende des Kegelstumpfes
   (22) so beschaffen ist, daß der kegelförmige Flüssigkeitsstrahl (13) während des Betriebs die Flüssigkeitsschicht in dem Spalt unter Beibehaltung seiner
   konischen Gestalt durchsetzt.

7. Vorrichtung nach Anspruch 6, d a d u r c h   g e -
   k e n n z e i c h n e t , daß die Basis des Kegelstumpfes (22) ungefähr in der Mitte zwischen der Düse
   (12) und dem Siebtuch (15) oder etwas oberhalb dieser
   Mitte liegt.

FIG.1

FIG.2